Europäisches Patentamt

European Patent Office

Office européen des brevets

(19)

(11) EP 0 581 021 B1

(12) **EUROPEAN PATENT SPECIFICATION**

(45) Date of publication and mention
of the grant of the patent:
**13.05.1998 Bulletin 1998/20**

(51) Int Cl.⁶: **H02M 5/257**, H05B 39/04,
H02M 5/293

(21) Application number: **93110158.8**

(22) Date of filing: **25.06.1993**

(54) **A device for regulating AC-powered loads**

Gerät zur Regelung von Wechselstromlasten

Appareil de régulation de charges alimentées en courant alternatif

(84) Designated Contracting States:
**DE FR IT**

(30) Priority: **24.07.1992 IT MI921813**

(43) Date of publication of application:
**02.02.1994 Bulletin 1994/05**

(73) Proprietor: **LA RELCO S.R.L.**
**I-20122 Milano (IT)**

(72) Inventor: **Mentaschi, Riccardo**
**I-20129 Milano (IT)**

(74) Representative: **La Ciura, Salvatore**
**Via Francesco Sforza, 3**
**20122 Milano (IT)**

(56) References cited:
**GB-A- 2 146 499**      **GB-A- 2 173 961**
**GB-A- 2 213 659**      **GB-A- 2 230 367**
**US-A- 5 072 170**

# Description

This invention relates to a device for regulating AC-operated loads, wherein use is made of a gate-insulated, bipolar transistor that is parallel-connected to a rectifier bridge and operated so as to be energized upon the mains-alternating current crossing the zero value and deenergized at a point of the half-wave which is variable as a function of the voltage to be supplied to the load.

A device having the features contained in the preamble of claim 1 is known from the document US-A-5 072 170.

The regulator of the invention can be utilized with different types of loads being powered by mains voltage, for example, for adjusting the light intensity of incandescent or quartz-iodine lamps, for controlling power supplied to motors, resistances, lamellar or toroidal transformers, etc., and other AC-powered apparatus.

Several types of regulators capable of adjusting and limiting power delivered to a mains-current operated load such as a lamp of which it is desired that the light intensity is adjusted, are already known. In most cases, these devices are dimmers which act to partialize mains voltage by using properly driven triacs.

However, circuits based on the use of triacs have a number of disadvantages some of which are as follows:

- high interference emission requiring use of interference suppressors resulting in an increase in dimensions, weight, cost of the device as well as increased AC-hum and worst conditions from minimum load;
- difficulty in connecting several triacs in parallel in order to increase maximum current of the circuit and the circuit being not able to be protected unless fuses are used;
- necessity of an energization-holding current which imposes minimum limit of load;
- high dV/dt at the time of energization which leads to high current peaks;
- significant circuit complexity in case of great phase-difference between current and voltage.

Also, dimmers based on the use of MOSFETS have been developed.

However, these devices too have same limitations and these are, in particular: great circuit complexity in order to control turn-off, necessity of an inductance, though small it may be, to limit interference emission, necessity of isolating the power stage by means of an isolation transformer in case of push-button control having the push-buttons connected to one phase, and a high Rdson of the MOSFETS resulting in greater voltage drop and dissipation which limits the maximum power with the silicium and dissipator area being the same.

The object of this invention is to overcome the limitations and disadvantages as referred to above by means of a device for adjusting an AC-powered load, which utilizes fewer components without the necessity for the power stage to be isolated galvanically, with electronic protection being able to be restored following to overload and/or short-circuit occurrences, with gradual switching-on (soft-start), and with the controlled power being able to be increased by synchronizing several modules together; which offers possibility of control using push-buttons, infra-red, home bus, and possibility of analog control of loads whose high inertia does not permit regulation to be easy made by means of push-buttons; and which is of small dimensions such as to allow for the device to be enclosed in boxes as currently used in civil buildings.

The above objects and other features of the invention are achieved by a regulator according to the characterizing part of the annexed claims.

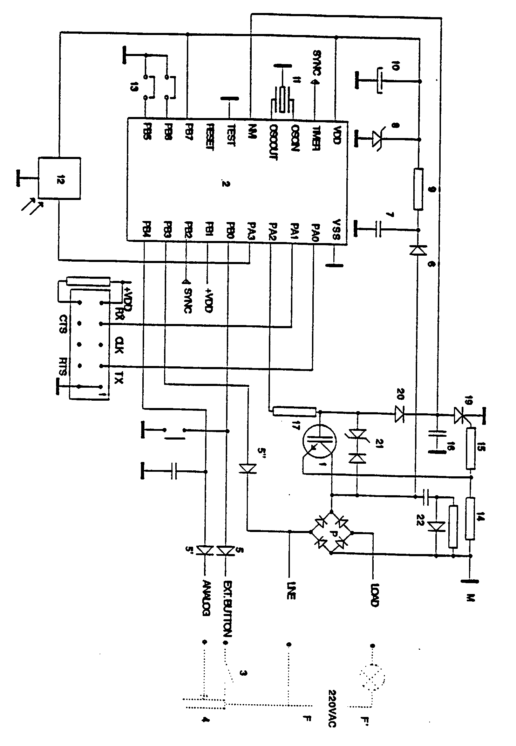

The invention will now be described in details, as a non-limiting example only, reference being made to figure 1 of the accompanying drawing which shows a wiring diagram of a regulator.

The regulator is based on the use of an insulated-gate, bipolar transistor (IGBT) that is designated by the numeral 1 on diagram figure 1, connected between the positive and the negative of a bridge P, and controlled by a microcontroller 2 which, as is explained in the following, causes the transistor 1 to become conductive at the beginning of the positive half-wave of the driving current, to return it to interdiction state at a variable point of the half-wave, according to adjustment by the user.

In the drawing, M is the earth o the rectifier circuit, while F and F'designate the two phases of the line. The bridge P is to rectify the line current.

One phase of the line is sent to a push-button 3 or a potentiometer 4 which is external to the device and then to the cathode of a diode 5-5' whose anode is connected to microcontroller 2 provided with internal pull-up resistance.

Then, at closed push-button, a low signal occurs durig one half-wave, whereas during the other half-wave the signal is always high.

In order to recognize the zero-cross passages, there is generated, based on the same principle, a square-wave signal (5").

The microcontroller 2 acts so that, instead of detecting the zero-crossing passages by reading the signal across a diode connected to the positive of rectifier bridge, it will read this square-wave whose leading edge is indicative of the beginning of the positive half-wave and the return to zero is indicative of the start of the negative half-wave.

This permits the microcontroller to decide when the state of external controls are to be read.

The microcotroller (a CMOS with AD converter) may, for example, be a microcontroller 6210 as available from SGS.

The supply circuit for the microcontroller comprises a diode 6, a capacitor 7, a zener 8 with its associate zener current-limiting resistance 9 and a capacity 10. Besides being used as a filter the capacitor 10 also serves as a buffer accumulator of energy for supplying the microcontroller 2, since this latter, when inoperative, is brought to WAIT-state (pulsating current). The capacitor 10 also acts to hold the microprocessor operative, in case of mains voltage failure, for as long as 0.2sec (according to standard requirements).

A resonator 11 generates the clock frequency of microcontroller 2. 12 is an infra-red receiver and amplifier which permits the variator to be remote controlled, while 13 shows the microswitches capable of selecting the address of the infra-red signal from remote control.

With reference numeral 14, there has been designated a resistance arranged between the IGBT emitter 1 and the ground, which resistance acts upon the current flowing in the circuit and, when this current exceeds a given value, it energizes a SCR 19 which causes the capacity 16 to be discharged and the signal NMI of the microcontroller to be lowered so that this latter will turn-off the output of IGBT pulses and, through a separator diode 20, immediately bring the IGBT base to ground.

Resistance 14 also compensates for operation of the IGBTs' when parallel connected as explained further below.

Arranged between the base of IGBT 1 and the microcontroller 2 is a high value, driving resistance 17 which serves as a means for rounding-off the first change-over part of IGBT.

21 shows a diode and Zener for protecting the breakdown voltage of IGBT.

More substantially, the transistor IGBT 1 will close the bridge with pulses starting from zero-crossing to maintain the bridge closed for a time being set by the microcontroller 2 on the basis of external controls.

Interruption does not occur in a sudden manner but with a wavefront having a curve which changes as a function of the values of a resistance 17 and internal capacity unit arranged between the gate and the emitter of IGBT. In this way, any sudden current change in the circuit is avoided and interferences are kept within standard limits. Moreover, in order to dispense with the galvanic isolation circuit between the control circuit (one supply fieldof which would be connected to the AC-mains) and the power stage, the impulsive signal (one half-wave from the line) is brought to the cathode of diode 5'', whose anode is connected to the input of microcontroller 2.

As compared with MOSFETS and normal power transistors, the IGBT has reduced saturation losses and more slowness in turning-off with a characteristic recurrent curve being shown in the lower portion (tail time) which limits interference emission.

Moreover, this component has one capacity between the gate and the emitter and another one between the gate and the collector so that, by properly increasing the gate driving resistance, and due to the gate-emitter capacity, a network RC is created and permits the state of the current during the first portion of turn-off to be determined.

The gate-collector capacity is able, in case of load's high dV/dt due to fast voltage peaks, to cause the IGBT to be reexcited, whereby the IGBT will protect itself as a break-down voltage.

Participating to this protection is the gate resistance which is of high value; in order to compensate for the intervention point, use is made of a RC circuit between the collector and the emitter 22, which further reduces interference emission due to the otherwise high dV/dt at turn-off.

The microcontroller is planned so as to act in different ways upon regulation according to the length of signal from push-buttons.

By "push-buttons", as used here, it is intended to mean the internal button, the external buttons or the infra-red transmitter button, indifferently.

More particularly, the microcontroller will distinguish between signals having a duration of 0.1 to 0.5 seconds, signals lasting 0.5 to 1.5 seconds and signals of greater length.

In the first case, i.e. signal lasting less than 0.5 sec, the device turns-off or will automatically regulate the load to the same value as the last value for which it had been set, which value is conveniently stored.

Where the remote control button is pressed for a time of 0.5 to 1.5 sec, the regulator goes to maximum, while when the time of 1.5 sec. is exceeded, the microprocessor causes the transmitted load to cyclically vary between the minimum and the maximum value, to stop and store at that load which is attained when the signal from push-buttons is interrupted.

In substance, pressing the push-button causes the device to be switched-on at the last stored value and, by maintained pressing action, the device is then regulated at the maximum load and, thereafter, with the button being continued to be pressed, this regulation is varied with cyclic run, between maximum and minimum values.

At the start of operation a step of initialization is provided, during which the memories are zeroized, the state (whether at ground or at plus 5 v) of two pins is read to set the gate state and the internal variables, whereafter the receiver will read whether the button input is short-circuited or open, so as to set the potentiometer-like-operating flag in the first case and to read, on the contrary, the value of the ADC input in the latter case, in order to utilize this value as the value for the minimum (button regulation).

The microcontroller is provided reading each zero-crossing passage and for activating each time the IGBT, whereupon to bring it to interdiction at a predetermined point from the half-wave, as a function of the voltage to be supplied.

The switching-off point of IGBT is, however, calculated by the microcontroller for only the first of each pair of half-waves, for example, at each positive half-wave, while the switching-off on the second half-wave, for example, the negative half-wave, takes place after a time equal to the length of a half-wave, as counted from the switching-off performed on the positive half-wave.

Thus, in a case of mains-frequency of 50 hertz, the microcontroller activates the IGBT at the start of the positive half-wave, switches it off at a point of the half-wave which is a function of the voltage to be supplied, begins to count a time of 10 milliseconds, reactivates the IGBT at the start of the negative half-wave and switches it off at the end of the 10 milliseconds it had commenced to count.

In this manner it is ensured that the two portions of half-wave are thoroughly symmetric to one another.

Thereafter, a further 10 ms (at 50Hz) time is counted on so that, in this way, it is possible to only read the zero-crossings in a precise time "window" with all of the other pulses, likeky to be generated by load or mains-supply interferences, being discarded.

Thus, at zero-crossing, the following check operation is performed:

$$(Tr - Ti - F) < 0 ?$$

where:

Tr = time remaining before the 10ms are at an end,
Ti = duration of the last pulse from zero-crossing to IGBT's turn-off,
F = window wherefrom the zero-crossing signal begins to be accepted (Ex., if F=0.5ms the zero-crossing signal will only be accepted after 9.5ms from the preceding one).

The switching-on of IGBT will thus be enabled once, and only once, at a precise time's window where the true zero-crossing by the mains current can be expected to occur.

This continued counting-on of the 10ms, also permits the state of the buttons or the analogic input to be red at a precise instant, for example, 1.5ms before zero-crossing, in a region away from electric noises of switching operation (IGBT and diodes).

Furthermore, this same counting process ensures that, in case of power failure and, thus, in the absence of zero-crossings, the microcontroller is maintained in a synchronized state and ready to restart upon voltage being restored.

Switching-on always occurs from the negative halfwave and switching-off (either normal or due to protection upon overload and/or short-circuit occurrences) always occurs on the negative half-wave so that correct hysteresis loop for the cores of the adjusted electromechanical transformers is ensured; the soft start also makes for the cores not becoming saturated; the thorough symmetry of positive and negative half-waves ensure that no d.c. voltage exists at the transformers, thereby preventing them from overheating. The microcontroller also allows for it to synchronize or synchronize itself with other devices, thereby to permit several separate loads, or - by connecting the power outputs together in parallel - loads of greater power than the rated power of one single device, to be controlled simultaneously.

There is, in fact, a SYNC-OUT pin provided on the main module (master) which is low when the device is OFF, and high when the device is ON, said pin becoming low for a few microseconds just before the IGBT is switched off.

By having this output connected to the SYNC-OUT input (with internal pull-up resistance) of another device, at power-on, the low state of the pin being recognized, the device goes into synchronized (slave) mode. With correct management of the execution times, the turn-off of the IGBTs' of the several connected devices will occur simultaneously.

Also provided is the control of a led which is to indicate: the supply state of the device, the voltage supplied with light inversely proportional to the one of the load, the correct reception of the infrared signal with slow blinking and the short-circuiting or overheating condition with rapid blinking.

The method of controlling the microprocessor will be best understood from a reading of the following description of the microprocessor program which is given by way of a non limiting example.

RECEIVER

Main Program:

Enters a loop and goes to wait from which it goes out to enter again at each interrupt; goes out the loop only if the max voltage flag is set (once each cycle, i.e. every 20 ms at 50hz).

If in SLAVE mode, it reenters the loop, otherwise (master), when out of loop, will test whether strings (IR or SCI) have been received and, if so, it interpretates them, otherwise it performs the button or potentiometer subroutines according to the associated flags; if there are strings to be transmitted it will send them (SCI), then it reenters the main loop.

Zero crossing interrupt:

Switches-off the IGBT, recognizes whether the interrupt is occurred at the beginning of either the positive or the negative half-wave, and, in the first case only, it initializes the timer with such value as set by the sensor or the potentiometer.

Timer Interrupt:

Makes the SYNC-OUT pin to go low.
Switches-off the IGBT, reinitializes the timer for 10ms (next switching-off at subsequent half-wave at 50Hz), sets the second half-wave flag, activates the infra-red interrupt and deactivates the interrupt SCI.

On next time, it switches-off the IGBT, reinitializes the timer for 10ms without activating the interrupt thereof, resets the second half-wave flag, deactivates the infra-red interrupt, activates the home bus interrupt and sets the max voltage flag (see main).

If the dimmer is ON, it brings the SYNC-OUT back to high, otherwise allows for it to remain low.

SYNC Interrupt:

Only operative in SLAVE-mode-set modules.

At zero-crossing, if this pin is low, it turns the IGBT off, otherwise it turns it on.

Each high-to-low transition of this pin results in IGBT's switching-off

Sensor Subroutine:

Call from MAIN each 20ms (if in sensor-mode).

Tests the push-button state with an antibounce routine but not before 1ms from IGBT changeover.

If the push-button is not pressed down, performs the soft start if this is in course, then goes back to MAIN.

Otherwise, checks whether the key is kept pressed from more than 1.5sec. and, in this case, causes the load to continuously vary between minimum and maximum; if the key is maintained pressed for a time of 0.5 to 1.5 sec. it makes a"ON" at maximum, while if the key has been pressed for more than 0.1 sec. and less than 0.5 sec., it switches-on, if it was switched-off, or conversely.

ADC Subroutine:

Call from initialization, if in sensor-mode, or call from MAIN each 20ms (if in potentiometer-mode).

Reads 4 times the 8-bit signal not before 1ms from IGBT changeover, converts into 6 bit and performs the mean.

The detected value is directly uased for regulation with soft start at increasing regulation and instantaneous at diminishing.

Overload Interrupt:

Switches-off IGBT, stores the last regulation value and reactivates for the next sinusoidal function the soft start cycle which will bring the regulation back to the preceding value if the overload or the short-circuit will have been removed.

Moreover, if the short-circuit or overload occurs at a time following the first 2ms from zero-crossing it causes the IGBT's switching-on to be disabled for two half-waves, thereby to permit recharging of capacitor 16 and, thus, allow for correct saturation of IGBT on next switching-on (reverse voltage polarity with respect to the preceding one) with no limitations on gate voltage across diode 20.

Should the set control value be not attained following to a definite number of attempts, the controller will change to OFF state.

IR Interrupt:

Only operative during positive half-waves; calls for the reception routine which synchronizes on the start/stop bit. Recognizes the 1 and the zero and generates the string. In case of error (no start/stop, no zero, no 1) it goes out.

SCI Interrupt:

Operative during negative half-waves only, calls for the reception routine which recognizes the 1 and the zero and creates the string(s). In case of error (no start/stop, no zero, no 1) it goes out.

IR Decoding:

Compares the address of the received string with the one sensed at the initialization: if different, it goes out, otherwise it will decode the received instruction and obey it.

SCI Decoding:

Decodes the received instruction and obeys it.

SCI Transmission:

At the end of each regulation, it transmits the supplied power as percentage.

Note: the same uP may also contain the options for operating with the conventional power circuit with TRIAC logic level and the conventional anti-interference coil. This makes, however, not a part of this patent.

TRANSMITTER

Main Program:

Puts to HALT the uP with nearly no consumption from which it goes out upon arrival of an interrupt; at the end of the interrupt routine it goes back to HALT.

Interrupt Key Matrix:

When a line key (address) is pressed down an interrupt is created.

Sweeping of the lines and columns is performed and a string is generated which will be transmitted in PPM (Pulse Position Modulation) following to a start/stop bit, and this in a continuous manner until keys are released.

In case of error (several pressed keys or undesired combinations) no transmission will occur.

Many modifications and changes may be easily thought by a person skilled in the art and may be made to the above described embodiment without departing from the scope of this invention.

## Claims

1. A controllable device for regulating AC-powered loads, of the type comprising a semiconductor (1) connected in parallel to a rectifier bridge (P) and means arranged to act upon said semiconductor in order to energise it upon the current passing across zero, and to bring it to interdiction at a point of the half-wave which is variable as a function of the load to be transmitted, wherein said semiconductor is a gate insulated, bipolar transistor (IGBT), characterised in that said semiconductor (1) is connected to to said rectifier bridge (P), not galvanically insulated by the control device (2), by means of a resistor (14), and said current passing across zero is read by a diode (5") connected to the rectifier bridge (P).

2. The device of claim 1, characterised in that means are provided which energise the IGBT each time the mains current passing across zero to bring it to interdiction-state, alternatively, after a time which is a function of the voltage to be supplied, and after a time, as counted by a timer from the first switching-off, which is equal in duration to the length of a half-wave.

3. The device according to any preceding claim, characterised in that the IGBT is of the logic-level type.

4. The device according to any preceding claim, characterised in that the circuit is supplied with the voltage present on the rectifier bridge (P) when not short-circuited by the semiconductor.

5. The device according to any preceding claim, characterised in that the microcontroller is planned so that, at switching-on, the value of the voltage to be supplied is not immediately attained but is delayed according to a predetermined time and also to the current on the load.

## Patentansprüche

1. Kontrollierbare Vorrichtung für die Regelung von elektrischen Wechselstromladungen, solche, daß sie einen mit einer Gleichrichterbruecke (P) parallelgeschalteten Halbleiter (1) und Mittel enthält, die so angeordnet sind, daß sie auf diesen Halbleiter wirken, um ihn am elektrischen Nulldurchgang zu erregen, und ihn in einem Punkt der halben welle, der variabel in Funktion der Ladung, die man übertragen soll, ist, zur Sperre bringen, wo dieser Halbleiter ein zweipoliger, isolierter Gittertransistor (IGBT) ist, dadurch gekennzeichnet, daß dieser Halbleiter (1) mit dieser von dem Kontrollvorrichtung (2) nicht galvanisch isolierten Gleichrichterbruecke (P) durch einen Widerstand (14) verbunden ist und daß dieser Strom, die durch Null geht, von einer mit der Gleichrichterbruecke verbundenen Diode (5") gelesen ist.

2. Vorrichtung nach Anspruch 1, dadurch gekennzeichnet, daß Mittel versehen sind, die den IGBT jedes Mal, daß der Hauptstrom durch Null geht, erregen, um ihn zur Sperre abwechselnd, nach einer Zeitspanne, die eine Funktion der Spannung, die man versehen soll, ist, und nach einer von dem ersten Ausschaltung mit einer Zeitschaltuhr gezählten Zeitspanne, die dieselbe Dauer der halben wellenlänge hat, zu bringen .

3. Vorrichtung nach einer der vorherigen Ansprüche, dadurch gekennzeichnet, daß die Art des IGBT von logischem Niveau ist.

4. Vorrichtung nach einer der vorherigen Ansprüche, dadurch gekennzeichnet, daß der Kreis mit der auf der Gleichrichterbruecke (P) versehenen Spannung gespeist ist, wenn er von dem Halbleiter nicht kurtgeschlossen ist.

5. Vorrichtung nach einer der vorherigen Ansprüche, dadurch gekennzeichnet, daß der Mikrokontrollvorrichtung so geplant ist, daß zur Einschaltung der wert der Spannung, die man versehen soll, nicht sofort erreicht ist, sondern auf Grund einer festgesetzten Zeit und auch des Stromes auf der Ladung, verspätet ist.

## Revendications

1. Dispositif contrôlable pour le réglage de charges électriques à courant alternatif, du type comprenant un semi-conducteur (1) accouplé en parallèle à un pont redresseur (P) et moyens disposés d'une façon à agir sur ledit semi-conducteur dans le but de l'exciter au passage du courant par le zéro et de le porter à la coupure dans un point de la demi-onde qui est variable en fonction de la charge à transmettre, où ledit semi-conducteur est un transistor à porte bipolaire isolé (IGBT), caractérisé du fait que ledit semi-conducteur (1) est relié audit pont redresseur (P), non isolé galvaniquement du dispositif de contrôle (2), au moyen d'un résisteur (14) et ledit courant qui passe par le zéro est lu par un diode (5") couplé au pont redresseur.

**2.** Dispositif selon la revendication 1, caractérisé du fait que des moyens sont fournis qui excitent l'IGBT toutes les fois que le courant principal passe par le zéro pour le porter dans un état de coupure, alternativement, après une période de temps, qui est en fonction du voltage à fournir, et après une période de temps, compté par un compteur à partir de la première coupure, qui est égale comme durée à la longueur d'une demi-onde.

**3.** Dispositif selon une des précédentes revendications, caractérisé du fait que l'IGBT est du type à niveau logique.

**4.** Dispositif selon une des précédentes revendications caractérisé du fait que le circuit est alimenté selon le voltage présent sur le pont redresseur (P) quand il n'est pas mis en court-circuit par le semi-conducteur.

**5.** Dispositif selon une des précédentes revendications, caractérisé du fait que le micro-dispositif de contrôle est projeté de façon que, au moment de l'allumage, la valeur du voltage à fournir n'est pas atteinte tout de suite mais elle est retardée sur la base d'un temps préétabli et aussi du courant sur la charge.